(19) Europäisches Patentamt
European Patent Office
Office européen des brevets

(11) **EP 4 693 852 A1**

(12) **EUROPEAN PATENT APPLICATION**
published in accordance with Art. 153(4) EPC

(43) Date of publication:
**11.02.2026 Bulletin 2026/07**

(21) Application number: **23930387.8**

(22) Date of filing: **28.03.2023**

(51) International Patent Classification (IPC):
**H02K 23/58** $^{(2006.01)}$    **H02K 3/04** $^{(2006.01)}$
**H02K 3/47** $^{(2006.01)}$

(52) Cooperative Patent Classification (CPC):
**H02K 3/04; H02K 3/47; H02K 23/58**

(86) International application number:
**PCT/JP2023/012645**

(87) International publication number:
**WO 2024/201747 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Citizen Micro Co., Ltd.**
**Hidaka City, Saitama 350-1251 (JP)**
• **Citizen Watch Co., Ltd.**
**Nishitokyo-shi, Tokyo 188-8511 (JP)**

(72) Inventors:
• **IGARASHI, Satoshi**
**Hidaka City, Saitama 350-1251 (JP)**
• **YANAGISAWA, Akira**
**Hidaka City, Saitama 350-1251 (JP)**
• **YOKOCHI, Masato**
**Hidaka City, Saitama 350-1251 (JP)**

(74) Representative: **Louis Pöhlau Lohrentz**
**Patentanwälte**
**Merianstrasse 26**
**90409 Nürnberg (DE)**

(54) **CORELESS MOTOR**

(57)    To change properties of a motor without lowering the degree of freedom in designing the motor, a coreless motor (100) includes a rotating shaft (20); a coil (60) that is formed by winding a conductive wire (61) into a cylindrical shape, the coil being configured to rotate together with the rotating shaft (20); and a cylindrical magnet (30) that is disposed inside or outside the cylindrical coil (60). An angle interval (β) about an axis (center C) of the rotating shaft (20) between conductive wire portions (as one example, between two parallel portions (62), (62)) in a single winding in the coil (60) is set to be different from an angle interval (a) about the axis (center C) of the rotating shaft (20) between magnetic poles (30N, 30S) of the magnet (30).

[FIG.6]

## Description

[Technical Field]

The present invention relates to a coreless motor.

[Background Art]

In a coreless motor, a rotor is formed only by windings without including an iron core in the coil. One example of a method for winding a conductive wire to form the coil is to wind the wire into a hexagonal shape (tortoise-shell shape). In this tortoise-shell shape winding method, for example, the conductive wire is wound in the circumferential direction of the outer peripheral surface of a hexagonal prism, while being gradually displaced in the axial direction of the hexagonal prism, thereby forming a coil element having a hexagonal spiral shape. Then, the hexagonal prism is axially pulled out from the coil element, thereby obtaining a coil element formed into a hexagonal-prism shape only with the conductive wire spirally wound.

Then, edges corresponding to mutually opposing side surfaces of the hexagonal prism are moved in opposite directions along the axial direction of the prism to flatten the prism into a planar shape. A plurality of such flattened coil elements is arranged in a ring shape, and their axial end portions are connected together, thereby forming a cylindrical coil.

The cylindrical coil includes, on both the outer surface side and the inner surface side of the cylinder, a parallel portion extending parallel to the axis of the cylinder, and two oblique portions adjacent to the parallel portion.

Here, it is general to set the angle interval about an axis of the motor between the two parallel portions in the tortoise-shell shape of a single winding of the coil to be equal to the angle interval about the axis of the motor between the magnetic poles of the magnet. Specifically, for example, when the angle interval about the axis between the N-pole and the S-pole of the magnet (hereinafter referred to as "magnetic pole pitch") is 180 degrees, the angle interval about the axis between the two parallel portions of the coil (hereinafter referred to as "coil pitch") is also set to 180 degrees.

Some coreless motors have a configuration in which the angle interval of the coil element is not equal to the magnetic pole pitch, from the viewpoint of cost and workability in the manufacturing process (see, for example, Patent Literature 1).

[Prior Art Documents]

[Patent Literature]

[Patent Literature 1] Japanese Patent Application Publication No. H1-186143

[Summary of Invention]

[Problem to be solved]

When various properties of the motor are to be changed, it is common to change the dimension of the parallel portion of the coil or the number of turns of the coil. For example, to increase the output torque, which is one of the properties of the motor, the dimension of the parallel portion of the coil is increased. To increase the rotation speed, which is another of the properties of the motor, the number of turns of the coil is decreased.

However, if the overall length of the coil is increased to increase the dimension of the parallel portion of the coil, the overall length of the motor increases. If the full length of the coil is not changed, the inclination angle of the oblique portions of the coil changes, increasing the radial thickness of the oblique portions and thereby increasing the diameter of the motor. Further, if the number of the turns of the coil is decreased to increase the rotation speed of the motor, the stiffness of the coil may be reduced.

In other words, the degree of freedom in designing the motor becomes low by changing the properties of the motor.

The present invention has been made in view of the above circumstances. An object of the present invention is to provide a coreless motor capable of changing properties of the motor without lowering the degree of freedom in designing the motor.

[Solution to Problem]

The present invention provides a coreless motor including a rotating shaft; a coil that is formed by winding a conductive wire into a cylindrical shape, the coil being configured to rotate together with the rotating shaft; and a cylindrical magnet that is disposed inside or outside the cylindrical coil. An angle interval $\beta$ about an axis of the rotating shaft between conductive wire portions in a single winding in the coil is set to be different from an angle interval $\alpha$ about the axis of the rotating shaft between magnetic poles of the magnet.

[Effects of Invention]

According to the coreless motor of the present invention, it is possible to change the properties of the motor without lowering the degree of freedom in designing the motor.

[Brief Description of Drawings]

[FIG.1] FIG. 1 is a sectional view showing a longitudinal section including a center C of a rotating shaft of a coreless motor of a first embodiment.

[FIG.2] FIG. 2 is a perspective view showing a coil of the coreless motor shown in FIG. 1.

[FIG.3A] FIG. 3A is a schematic view showing Step 1 for producing the coil shown in FIG. 2.

[FIG.3B] FIG. 3B is a schematic view showing Step 2 for producing the coil shown in FIG. 2.

[FIG.4] FIG. 4 is a schematic view showing a positional relationship between a magnet and a hexagonal-shaped portion of a single winding of the coil.

[FIG.5] FIG. 5 is a schematic view showing the length of a parallel portion and the full length of the coil along an axial direction of the center C.

[FIG.6] FIG. 6 is a schematic view showing a relationship in size between a magnetic pole pitch and a coil pitch in the coreless motor.

[FIG.7] FIG. 7 is a graph showing the maximum torque output by a conductive wire of a single winding of the coil, when a ratio of the coil pitch to the magnetic pole pitch is set to 0.95, 1.00, 1.05, 1.10, and 1.25 (95, 100, 105, 110, and 125 %), in each coil where a ratio of the length of the parallel portion to the full length of the coil is set to 0.25, 0.30, 0.35, 0.40, and 0.45 (25, 30, 35, 40, and 45 %).

[FIG.8] FIG. 8 is a schematic view similar to FIG. 6, but showing a modified example formed by a short pitch in which the coil pitch is smaller than the magnetic pole pitch.

[Detailed Description of Embodiments]

An embodiment of the coreless motor according to the present invention is described in the following with reference to the drawings.

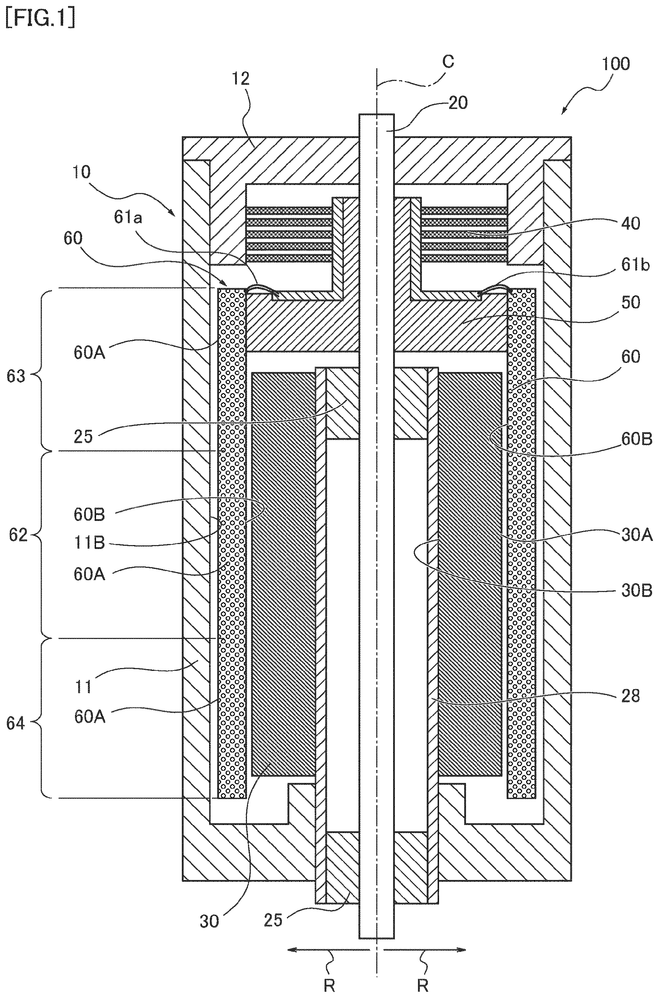

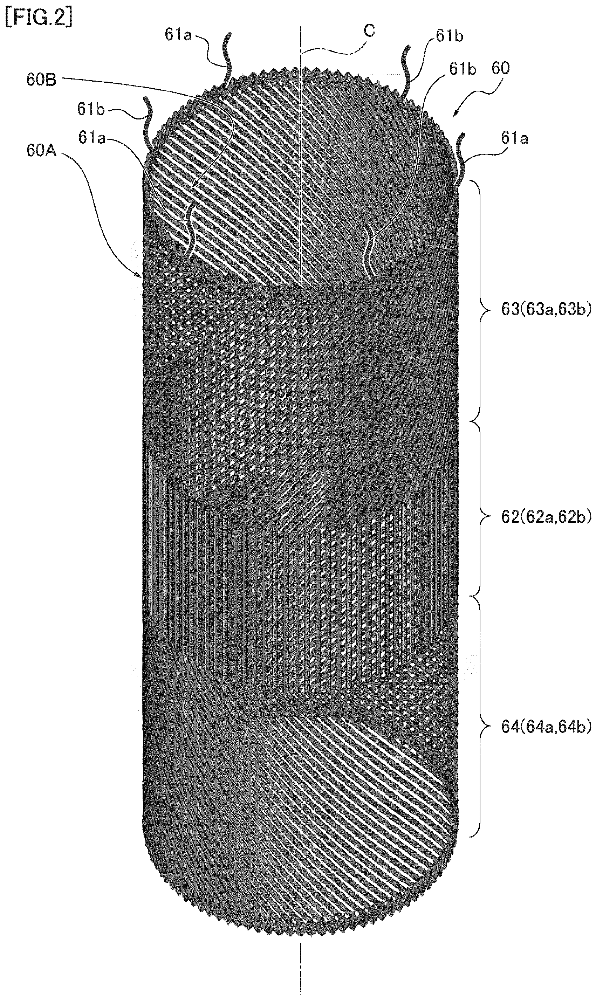

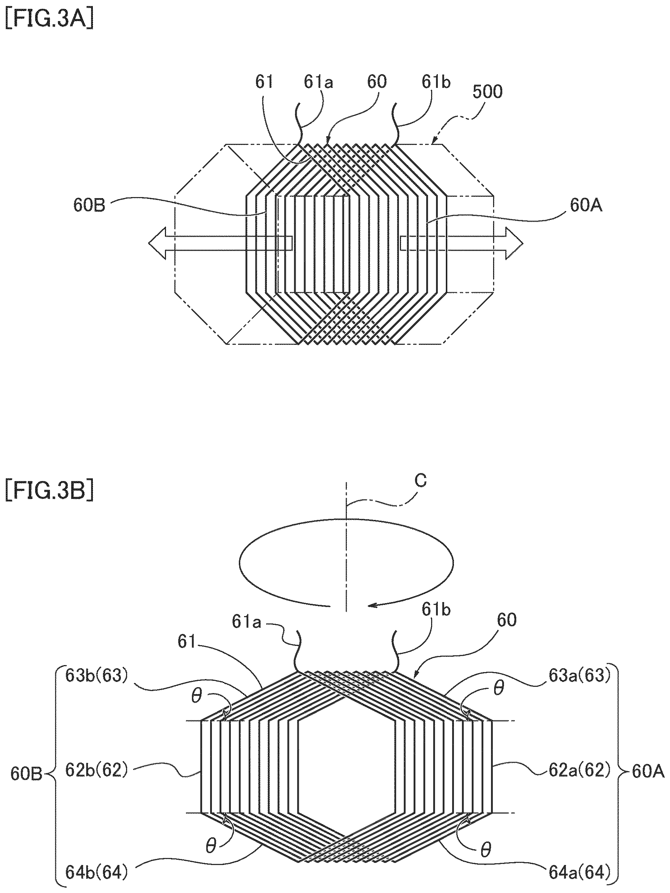

<First Embodiment> FIG. 1 is a sectional view showing a longitudinal section including a center C of a rotating shaft 20 of a coreless motor 100. FIG. 2 is a perspective view showing a coil 60 of the coreless motor 100 shown in FIG. 1. FIGS. 3A and 3B are schematic views showing steps for producing the coil 60. The coreless motor 100 corresponds to an embodiment (first embodiment) of a coreless motor according to the present invention.

As shown in FIG. 1, the coreless motor 100 includes the rotating shaft 20, the coil 60, a commutator 50, a magnet 30, a brush 40, and a housing 10.

The housing 10 is formed in a hollow cylindrical shape with both ends closed. The housing 10 receives the rotating shaft 20, the coil 60, the commutator 50, the magnet 30, and the brush 40. Both ends of the rotating shaft 20 project outward from the housing 10. The housing 10 includes a case 11 and a brush base 12.

The case 11 is formed in a cylindrical shape with one end closed. The case 11 is made of, for example, a soft magnetic material. The brush base 12 is formed in a substantially disk shape to close the open end of the case 11. The brush base 12 is formed of, for example, resin. The brush base 12 is provided with a connecting member (not shown) of a conductor connected to an external power source, and the brush 40 electrically connected to the connecting member.

The rotating shaft 20 is disposed along the center C, which is the axis of the cylindrical housing 10, to extend through the housing 10 and rotate freely about the center C. The commutator 50 is fixed to the rotating shaft 20. The coil 60 is fixed to the commutator 50. In other words, the rotating shaft 20, the coil 60, and the commutator 50 constitute a rotor.

As shown in FIG. 2, the coil 60 is formed in a cylindrical shape by winding a conductive wire 61 (see FIGS. 3A and 3B). The coil 60 rotates together with the rotating shaft 20 about the center C of the rotating shaft 20 as an axis. The coil 60 is formed by assembling a plurality of coil elements, each formed by winding a conductive wire 61 (e.g., copper wire). The coil 60 is formed such that an outer peripheral surface 60A of the cylinder does not come into contact with the inner peripheral surface 11B of the case 11. Details of the coil 60 are described hereinafter.

The commutator 50 is formed in a disk shape with a boss at its center through which the rotating shaft 20 passes. An outer peripheral portion of the disk of the commutator 50 is bonded with an adhesive to an inner peripheral portion at one end of the cylindrical coil 60 on the side close to the brush base 12, thereby integrating the commutator 50 with the coil 60. The commutator 50 is integrally coupled with the rotating shaft 20 that passes through the boss, and thus rotates together with the rotating shaft 20 about the center C.

The commutator 50 includes a conductive member that is electrically connected to terminals 61a, 61b of each conductive wire 61 of the plurality of coil elements constituting the coil 60 (see FIGS. 2, 3A and 3B). This conductive member extends to the outer peripheral surface of the boss and makes contact with the brush 40 provided on the brush base 12.

The magnet 30 is disposed inside the cylindrical portion of the coil 60 such that it does not make contact with the inner peripheral surface 60B of the coil 60. The magnet 30 is formed in a cylindrical shape with the center C as its axis. The magnet 30 is formed such that its outer peripheral surface 30A does not make a contact with the inner peripheral surface 60B of the coil 60. The magnet 30 is fixed at its inner peripheral surface 30B to an outer peripheral surface of a cylindrical support member 28 fixed to the case 11.

With this, the magnet 30 is indirectly fixed to the case 11 and is not displaced relative to the case 11. Inside the support member 28, bearings 25 are respectively disposed at both ends in the longitudinal direction of the support member 28, and the rotating shaft 20 is rotatably supported by these two bearings 25.

Next, details of the coil 60 are described as follows. The coil 60 is basically formed by bonding conductive wires 61 to each other with an adhesive and does not include any core such as an iron core. Therefore, the coil 60 is lighter in weight than a coil including a core.

As shown in FIG. 3A, the coil 60 is prepared by winding a conductive wire 61 around an outer peripheral surface of a winding jig 500, which has, for example, a hexagonal prism shape with a hexagonal cross section. At each turn (i.e., each winding around the outer peripheral surface of the hexagonal prism), the winding position of the conductive wire 61 is gradually shifted in the axial direction of the hexagonal prism, thereby forming the coil 60 into a spiral shape in which each single turn has a hexagonal (tortoise-shell) shape.

In FIGS. 3A and 3B, hexagons formed by the conductive wire 61 are described as being separate and independent, but this is for the sake of convenience to simplify the description of the drawings. In fact, the conductive wire 61, which is illustrated as multiple hexagonal loops, is actually a single wire wound in a spiral shape, in which both ends of the wire in each hexagonal loop are connected to the adjacent loops, so that the spiral-shaped single wire has two terminals, 61a, 61b.

Pulling the winding jig 500 out of the thus formed hexagonal spiral-shaped coil 60 yields the coil 60 formed in the hexagonal spiral shape by only the conductive wire 61. Then, sides of the coil 60, which correspond to mutually opposite surfaces of the hexagonal prism of the winding jig 500, are moved in opposite directions (indicated by "→" (arrows) in FIG. 3A) along the axial direction of the hexagonal prism, thereby forming the coil 60 flattened into a plane shape as shown in FIG. 3B.

The coil 60 shown in FIG. 3B is defined as a single coil element. A plurality of such coil elements are arranged in series in the axial direction of the hexagonal prism. Then, their axial end portions are connected together about the center C shown in FIG. 3B such that one surface 60A of the planar coil element becomes an outer surface (outer peripheral surface) and the other surface 60B becomes an inner surface (inner peripheral surface), thereby forming the cylindrical coil 60 shown in FIG. 2. The method for forming the coil 60 is not limited to the above described method.

The thus formed coil 60 is a coil 60 with a tortoise-shell shape (hexagonal shape). As shown in FIG. 2, on both the outer peripheral surface 60A side and the inner peripheral surface 60B side, the conductive wire 61 of the coil 60 includes a parallel portion 62 that extends in parallel with the axis (center C) of the rotating shaft 20, and two oblique portions 63, 64 that are connected to both ends of the parallel portion 62. The oblique portions 63, 64 of the conductive wire 61 each extend in a direction inclined at a predetermined angle θ with respect to a plane (indicated by an alternate long and short dashed line in FIG. 3B) perpendicular to the axis (center C). As shown in FIG. 3B, the directions of the inclined angles θ of the oblique portions 63, 64 are opposite to each other, but their absolute values are the same.

As shown in FIG. 3B, when it is necessary to distinguish between the parallel portion 62 on the outer peripheral surface 60A and the parallel portion 62 on the inner peripheral surface 60B of the coil 60, the parallel portion 62 on the outer peripheral surface 60A is referred to as a parallel portion 62a, and the parallel portion 62 on the inner peripheral surface 60B is referred to as a parallel portion 62b. Similarly, when it is necessary to distinguish between the oblique portions 63, 64 on the outer peripheral surface 60A and the oblique portions 63, 64 on the inner peripheral surface 60B of the coil 60, the oblique portions 63, 64 on the outer peripheral surface 60A are referred to as oblique portions 63a, 64a, and the oblique portions 63, 64 on the inner peripheral surface 60B are referred to as oblique portions 63b, 64b.

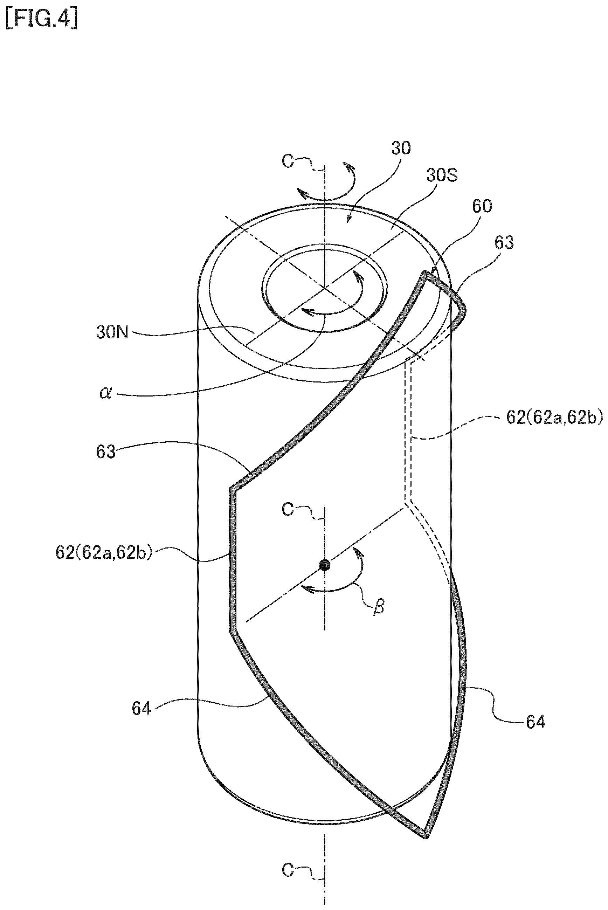

FIG. 4 is a schematic view showing a positional relationship between the magnet 30 and a hexagonal shape of a single winding of the coil 60. For example, as shown in FIG. 4, the magnet 30 in the coreless motor 100 according to the present embodiment has one N-pole 30N and one S-pole 30S formed across the axis of the center C. That is, the magnet 30 is formed such that the N-pole 30N and the S-pole 30S are arranged with an angular interval (angular pitch) α of 180 degrees about the axis of the center C of the magnet 30. The center of the N-pole 30N (N-pole center) and the center of the S-pole 30S (S-pole center), which are indicated by alternate long and short dashed lines in FIG. 4, correspond to angular positions where the absolute value of the magnetic flux density distribution of the magnet 30 reaches a maximum. In the following description, the angular pitch α between the center of the N-pole 30N and the center of the S-pole 30S is referred to as the magnetic pole pitch α.

A long dashed double-short dashed line in FIG. 4 indicates the boundary between N-pole 30N and the S-pole 30S, but the magnet 30 is not structurally separated at this boundary.

As shown in FIG. 4, the coil 60 in the coreless motor 100 of the present embodiment is formed such that two parallel portions 62, 62 in the hexagonal shape of the single winding are arranged at an angle interval (angle pitch) β about the axis of the center C of the magnet 30. The two parallel portions 62, 62 in the single winding of the coil 60 are the portions having the maximum angle interval about the axis of the center C. In the following description, the angle pitch β is referred to as a coil pitch β.

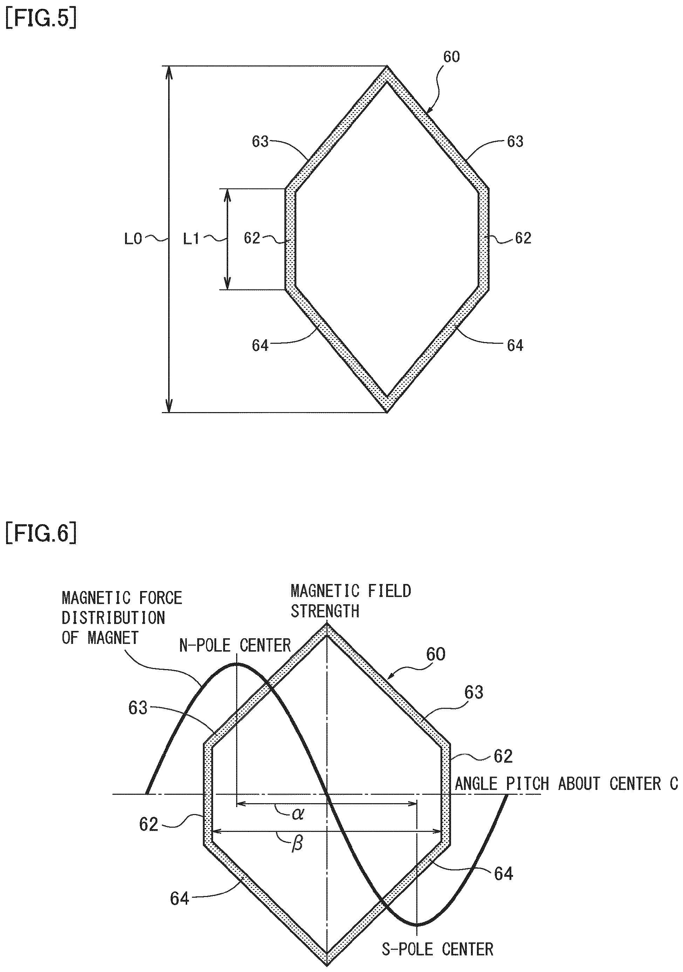

FIG. 5 is a schematic view showing the full length L0 of the coil 60 along an axial direction of the center C and the length L1 of the parallel portion 62. FIG. 6 is a schematic view showing the relationship in magnitude between the magnetic pole pitch α and the coil pitch β in the coreless motor 100, and also illustrating the magnetic force distribution represented by a trigonometric function, in which the magnetic force of the magnet 30 reaches its maximum at the centers of the N-pole 30N and the S-pole 30S.

As shown in FIG. 5, in the coreless motor 100, the coil 60 is configured such that the ratio (length ratio) L1/L0, where L1 is the length of the parallel portion 62 and L0 is the full length of the coil 60 along the axial direction of the center C, is set in a range not less than 0.25 (25%) and not greater than 0.45 (45%).

As shown in FIG. 6, as one example, the coreless motor 100 is formed by an over pitch where the coil pitch β is greater than the magnetic pole pitch α (α < β). In other words, the coreless motor 100 is configured such that the ratio β/α of the coil pitch β to the magnetic pole pitch α is set to be greater than 1.00. Specifically, β/α is set in a range (1.00 < β/α ≤ 1.25) that is greater than 1.00 (100 %) and not greater than 1.25 (120 %). In this case, since the magnetic pole pitch α is, as one example, 180 degrees, the coil pitch β is set in a range greater than 180 degrees and not greater than 225 degrees.

Here, the maximum torque T output by the coreless motor 100 due to the magnetic force acting on the conductive wire 61 of the coil 60 in the magnetic field of the magnet 30 is given by the following equation (1).

$$T = 2 * B * I * r * L * \sin\theta \quad (1)$$

In the formula (1), B represents the magnetic flux generated by the magnet 30; I represents the current through the coil 60; r represents the radius of the coil 60 (dimension along a radial direction R); L represents the length of the coil 60 (dimension along the direction of the center C); and θ represents the angle at which the conductive wire 61 in the coil 60 is inclined with respect to a plane perpendicular to the direction of the center C (90 degrees at the parallel portion 62; θ degrees at the upper oblique portion 63, and θ degrees at the lower oblique portion 64).

As a result, in the over-pitch coreless motor 100, although the peak of the magnetic force of the magnet 30 acting on the parallel portions 62 decreases, the magnetic flux acting on the oblique portions 63, 64 at the angular position of the magnetic force peak increases. As a result, the total magnetic flux acting on the entire coil 60 increases, and the maximum torque T of the coreless motor 100 increases.

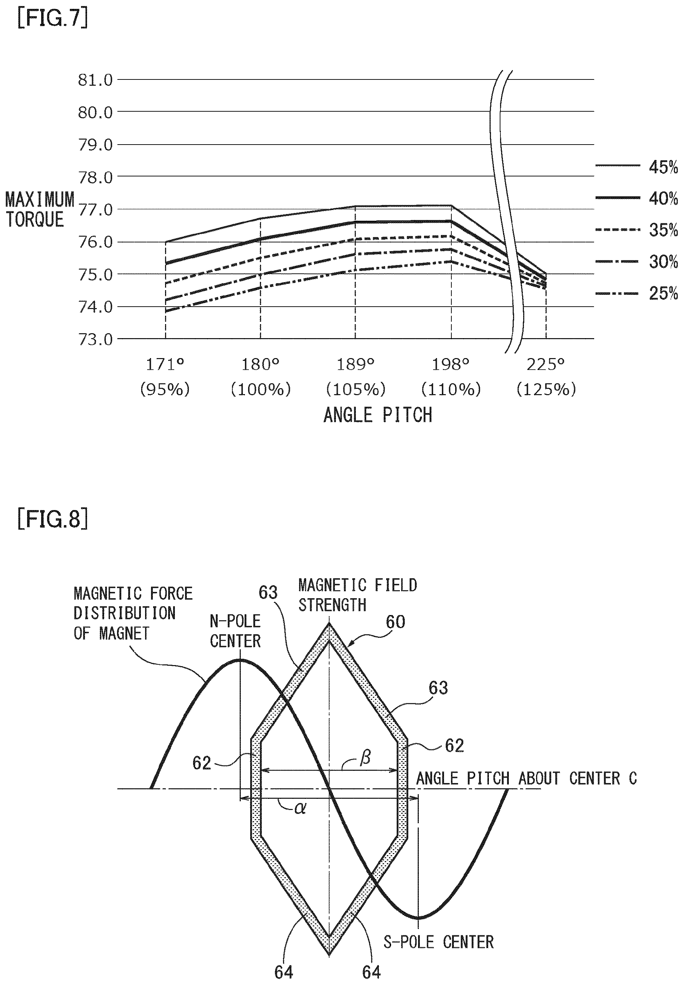

FIG. 7 is a graph showing the maximum torque T output by the conductive wire 61 of a single winding of the coil 60, when the ratio β/α of the coil pitch β to the magnetic pole pitch α is set to 0.95, 0.10, 1.05, 1.10, and 1.25 (95, 100, 105, 110, and 125 %), for each coil 60 in which the ratio L1/L0 of the length L1 of the parallel portion 62 to the full length L0 of the coil 60 is set to 0.25, 0.30, 0.35, 0.40, and 0.45 (25, 30, 35, 40, and 45 %).

FIG. 7 shows the maximum torque T output by the coil having the tortoise-shell shape, in which the oblique portions 63, 64 of the coil 60 are formed in a circular arc shape. In the case of the coil having the tortoise-shell shape, in which the oblique portions 63, 64 of the coil 60 are formed in a straight-line shape, the maximum torque T output by the coil becomes slightly lower than the maximum torque T shown in FIG. 7. However, the change of the maximum torque T relative to the change of the ratio β/α is similar to the graph shown in FIG. 7.

Among the graphs shown in FIG. 7, the coreless motor 100 of the present embodiment is configured as follows: the ratio L1/L0 of the length L1 of the parallel portion 62 to the full length L0 of the coil 60 is set to 0.25, 0.30, 0.35, 0.40, and 0.45 (25, 30, 35, 40, and 45%), and the ratio β/α of the coil pitch β to the magnetic pole pitch α is set in a range greater than 1.00 (100%) and not greater than 1.25 (125%).

These coreless motors 100 of the present embodiment are formed by the over pitch in which the coil pitch β is greater than the magnetic pole pitch α. As shown in FIG. 7, when the ratio β/α of the coil pitch β to the magnetic pole pitch α is set in a range greater than 1.00 (100%) and not greater than 1.15 (115%), the coreless motor 100 of the present embodiment can increase the maximum torque T, as compared with a coreless motor with β = α (β/α = 100%), which is not over-pitched. In particular, when the ratio β/α of the coil pitch β to the magnetic pole pitch α is set in a range not less than 1.05 (105%) and not greater than 1.10 (110%), the maximum torque T can be maximally increased. Therefore, in the coreless motor 100, it is preferable that the ratio β/α of the coil pitch β to the magnetic pole pitch α is set in the above-mentioned range.

The reason why the upper limit of the ratio β/α of the coil pitch β to the magnetic pole pitch α is set to 1.25 (125%) is that, if the ratio β/α exceeds this value, it becomes difficult for the coreless motor 100 to output a sufficient maximum torque T.

These coreless motors 100 of the present embodiment can change the maximum torque T of the coreless motor 100 by simply setting the ratio β/α of the coil pitch β to the magnetic pole pitch α to be greater than 100%, without changing the size, strength, or the like of the coreless motor, such as by increasing the dimension of the parallel portion 62 of the coil 60 or increasing the number of windings of the conductive wire of the coil 60.

The coreless motor 100 can change not only the maximum torque T of the coreless motor 100, but also change other properties of the coreless motor 100 by setting the ratio β/α of the coil pitch β to the magnetic pole pitch α to be an over pitch exceeding 100 %.

Specifically, for example, the coreless motor 100 can reduce the rotation speed of the coreless motor 100 by setting the ratio β/α of the coil pitch β to the magnetic pole pitch α to be an over pitch exceeding 100 %.

In the above-mentioned coreless motor 100, the magnet 30 is formed with one N-pole 30N and one S-pole 30S. However, in the coreless motor 100 of the present embodiment, the magnet 30 may be formed with two N-poles 30N and two S-poles 30S. In this case, the magnetic pole pitch α becomes 90 degrees. Therefore, the coil pitch β may be set in a range greater than 90 degrees and not greater than 112.5 degrees, based on the conditional expression "1.00 < β/α ≤ 1.25" of the ratio β/α of the coil pitch β to the magnetic pole pitch α.

In this case, to increase the maximum torque T, the coil pitch $\beta$ may be set in a range greater than 90 degrees and not greater than 103.5 degrees, based on the conditional expression "$1.00 < \beta/\alpha \leq 1.15$" of the ratio $\beta/\alpha$ of the coil pitch $\beta$ to the magnetic pole pitch $\alpha$. In particular, to maximize the maximum torque T, the coil pitch $\beta$ may be set in a range not less than 94.5 degrees and not greater than 99 degrees, based on the conditional expression "$1.05 \leq \beta/\alpha \leq 1.10$" of the ratio $\beta/\alpha$ of the coil pitch $\beta$ to the magnetic pole pitch $\alpha$.

Similarly, the magnet 30 in the coreless motor 100 of the present embodiment may be formed with n ($3 \leq$ n) N-poles 30N and n ($3 \leq$ n) S-poles 30S. In this case, the magnetic pole pitch $\alpha$ becomes 180/n degrees. The coil pitch $\beta$ may be set in a range greater than 180/n degrees and not greater than 225/n degrees, based on the conditional expression "$1.00 < \beta/\alpha \leq 1.25$" of the ratio $\beta/\alpha$ of the coil pitch $\beta$ to the magnetic pole pitch $\alpha$.

In this case, to increase the maximum torque T, the coil pitch $\beta$ may be set in a range greater than 180/n degrees and not greater than 207/n degrees, based on the conditional expression "$1.00 < \beta/\alpha \leq 1.15$" of the ratio $\beta/\alpha$ of the coil pitch $\beta$ to the magnetic pole pitch $\alpha$. In particular, to maximize the maximum torque T, the coil pitch $\beta$ may be set in a range not less than 189/n degrees and not greater than 198/n degrees, based on the conditional expression "$1.05 \leq \beta/\alpha \leq 1.10$".

As shown in FIG. 7, in the coreless motor 100 of the present embodiment, the larger the length ratio L1/L0 is, the greater the maximum torque T that can be output. However, as the length ratio L1/L0 increases, the cross-sectional area of the conductive wire 61 in the oblique portions 63, 64 in the direction perpendicular to the center C increases. As a result, the space factor of the conductive wire 61 in the parallel portion 62 decreases.

If the space factor of the conductive wire 61 in the parallel portion 62 becomes smaller than a predetermined value, the strength of the parallel portion 62 decreases. As a result, the coil 60 may be deformed by the centrifugal force generated when it rotates about the center C, and may come into contact with the housing 10. Therefore, the coil 60 needs to have a strength sufficient to prevent deformation during the rated rotation of the coreless motor 100.

As a result, in the coreless motor 100 of the present embodiment, the upper limit of the length ratio L1/L0 is set to be 0.75 (75 %) in consideration of the strength that the coil 60 should have. In particular, to sufficiently increase the strength of the coil 60 by considering a safety margin at the rated rotational speed, the upper limit of the length ratio L1/L0 is preferably set to 0.45 (45 %).

In the coreless motor 100 of the present embodiment, the lower limit of the length ratio L1/L0 of the coil 60 is set to be 0.25 (25 %) because this facilitates the coreless motor 100 in outputting the minimum required maximum torque T. If the length ratio L1/L0 is less than 0.25 (25 %), it becomes difficult for the coreless motor 100 to sufficiently output the maximum torque T.

<Modification> FIG. 8 is a schematic view corresponding to FIG. 6, showing a modified embodiment with a short pitch in which the coil pitch $\beta$ is less than the magnetic pole pitch $\alpha$ ($\beta < \alpha$). In the above-described embodiment, as shown in FIG. 6, the coreless motor 100 is formed by an over pitch in which the coil pitch $\beta$ is greater than the magnetic pole pitch $\alpha$. However, the coreless motor according to the present invention is not limited to one including an over-pitch coil. That is, as another embodiment of the present invention, the coreless motor of the modified embodiment may be formed by a short pitch in which the coil pitch $\beta$ is less than the magnetic pole pitch $\alpha$ ($\beta < \alpha$), as shown in FIG. 8.

Specifically, in the coreless motor of the modified embodiment, the ratio $\beta/\alpha$ of the coil pitch $\beta$ to the magnetic pole pitch $\alpha$ may be set in a range less than 1.00 (100 %) ($\beta/\alpha < 1.00$), for example, in a range not less than 0.90 (90 %) and less than 1.00 (100 %) ($0.90 \leq \beta/\alpha < 1.00$).

The coreless motor of the modified embodiment configured in this way can change properties of the coreless motor by employing the short pitch in which the ratio $\beta/\alpha$ of the coil pitch $\beta$ to the magnetic pole pitch $\alpha$ is less than 1.00 (100 %), for example, in a range not less than 0.90 (90 %) and less than 1.00 (100 %).

Specifically, the coreless motor of the modified embodiment can increase the rotation speed by employing the short pitch in which the ratio $\beta/\alpha$ of the coil pitch $\beta$ to the magnetic pole pitch $\alpha$ is less than 1.00 (100 %), for example, in a range not less than 0.90 (90 %) and less than 1.00 (100 %).

Therefore, when it is desired to increase the rotation speed to achieve a higher rotational speed, conventional coreless motors to which the present invention is not applied have responded by reducing the number of windings of the conductive wire 61 in the coil 60. However, a reduction in the number of windings of the conductive wire 61 in the coil 60 may lower the stiffness of the coil 60.

In contrast, the coreless motor of the modified embodiment does not reduce the number of windings of the conductive wire 61 in the coil 60, and therefore does not cause a decrease in the stiffness of the coil 60.

Each of the coreless motors 100 of the above-described embodiment and modified embodiment is an outer-rotor-type coreless motor in which the coil 60 is disposed outside the magnet 30. However, the coreless motor according to the present invention is not limited to an outer-rotor-type coreless motor. The coreless motor may be an inner-rotor-type coreless motor in which the coil 60 is disposed inside the magnet 30. In the case of an inner-rotor-type coreless motor, the outer peripheral surface of the magnet 30 is fixed, for example, to the inner peripheral surface of the case 11.

The coreless motor according to the present invention is not limited to the coreless motor including the tortoise-shell shape coil in which the oblique portions 63, 64 of the coil 60 are formed in straight lines, but may also be a coreless motor including a tortoise-shell shape coil in which the oblique portions 63, 64 are formed in curved shapes (for example, a circular arc, an elliptical arc, or a parabolic curve).

Furthermore, the coreless motor according to the present invention is not limited to the coreless motor including the tortoise-shell shape (hexagonal shape) coil, but may be a coreless motor including a coil with another shape (for example, a rhombus, a rectangle, a circle, or an oval). In this coreless motor, for example, when the coil is rhombic in shape, portions corresponding to the two parallel portions 62, 62 of the coil 60 are two vertices that are opposed to each other in a direction about the axis of the center C.

**Claims**

1. A coreless motor comprising:

   a rotating shaft;
   a coil that is formed by winding a conductive wire into a cylindrical shape, the coil being configured to rotate together with the rotating shaft; and
   a cylindrical magnet that is disposed inside or outside the cylindrical coil,
   wherein an angle interval $\beta$ about an axis of the rotating shaft between conductive wire portions in a single winding in the coil is set to be different from an angle interval $\alpha$ about the axis of the rotating shaft between magnetic poles of the magnet.

2. The coreless motor according to claim 1, wherein the angle interval $\beta$ is set to be greater than the angle interval $\alpha$.

3. The coreless motor according to claim 2, wherein a ratio $\beta/\alpha$ of the angle interval $\beta$ to the angle interval $\alpha$ is set in a range greater than 1.00 and not greater than 1.25.

4. The coreless motor according to claim 2, wherein a ratio $\beta/\alpha$ of the angle interval $\beta$ to the angle interval $\alpha$ is set in a range greater than 1.00 and not greater than 1.15.

5. The coreless motor according to claim 2, wherein a ratio $\beta/\alpha$ of the angle interval $\beta$ to the angle interval $\alpha$ is set in a range greater than 1.00 and not greater than 1.10.

6. The coreless motor according to claim 2, wherein a ratio $\beta/\alpha$ of the angle interval $\beta$ to the angle interval $\alpha$ is set in a range not less than 1.05 and not greater than 1.10.

7. The coreless motor according to claim 1, wherein the single winding of the coil comprises:

   parallel portions that extend in parallel with an axial direction of the rotating shaft, and
   two oblique portions that each extend in a direction inclined at an angle with respect to a plane perpendicular to the axial direction and that are connected to both ends of the parallel portions, wherein a ratio $L1/L0$ of a length $L1$ to a full length $L0$ is set in a range not less than 0.25 and not greater than 0.40, wherein the length $L1$ is a length of each of the parallel portions, and the full length $L0$ is a full length of the single winding in the coil along the axial direction of the rotating shaft.

8. The coreless motor according to claim 1, wherein the angle interval $\beta$ is set to be smaller than the angle interval $\alpha$.

**Amended claims under Art. 19.1 PCT**

1. A coreless motor comprising:

   a rotating shaft;
   a coil that is formed by winding a conductive wire into a cylindrical shape, the coil being configured to rotate together with the rotating shaft; and
   a cylindrical magnet that is disposed inside or outside the cylindrical coil,
   wherein an angle interval $\beta$ about an axis of the rotating shaft between conductive wire portions in a single winding in the coil is set to be greater than an angle interval $\alpha$ about the axis of the rotating shaft between magnetic poles of the magnet, and
   wherein a ratio $\beta/\alpha$ of the angle interval $\beta$ to the angle interval $\alpha$ is set in a range greater than 1.00 and not greater than 1.25.

2. The coreless motor according to claim 3, wherein a ratio $\beta/\alpha$ of the angle interval $\beta$ to the angle interval $\alpha$ is set in a range greater than 1.00 and not greater than 1.15.

3. The coreless motor according to claim 3, wherein a ratio $\beta/\alpha$ of the angle interval $\beta$ to the angle interval $\alpha$ is set in a range greater than 1.00 and not greater than 1.10.

4. The coreless motor according to claim 3, wherein a ratio $\beta/\alpha$ of the angle interval $\beta$ to the angle interval $\alpha$ is set in a range not less than 1.05 and not greater than 1.10.

5. The coreless motor according to claim 3, wherein the single winding of the coil comprises:

parallel portions that extend in parallel with an axial direction of the rotating shaft, and

two oblique portions that each extend in a direction inclined at an angle with respect to a plane perpendicular to the axial direction and that are connected to both ends of the parallel portions, wherein a ratio L1/L0 of a length L1 to a full length L0 is set in a range not less than 0.25 and not greater than 0.45, wherein the length L1 is a length of each of the parallel portions, and the full length L0 is a full length of the single winding in the coil along the axial direction of the rotating shaft.

[FIG.1]

[FIG.2]

[FIG.3A]

[FIG.3B]

[FIG.4]

[FIG.5]

[FIG.6]

[FIG.7]

[FIG.8]

## INTERNATIONAL SEARCH REPORT

| International application No. |
|---|
| **PCT/JP2023/012645** |

**A.    CLASSIFICATION OF SUBJECT MATTER**

*H02K 23/58*(2006.01)i; *H02K 3/04*(2006.01)i; *H02K 3/47*(2006.01)i
FI:   H02K23/58; H02K3/04 E; H02K3/47

According to International Patent Classification (IPC) or to both national classification and IPC

**B.    FIELDS SEARCHED**

Minimum documentation searched (classification system followed by classification symbols)

H02K23/58; H02K3/04; H02K3/47

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 36759/1982 (Laid-open No. 139891/1983) (MITSUBA ELECTRIC MFG. CO., LTD.) 20 September 1983 (1983-09-20), claims, pp. 3-12, fig. 1-5 | 1-2 |
| Y | | 7 |
| X | JP 2014-193069 A (MINEBEA CO., LTD.) 06 October 2014 (2014-10-06) paragraphs [0014]-[0044], fig. 1-9 | 1, 8 |
| Y | | 7 |
| Y | JP 52-56305 A (SONY CORPORATION) 09 May 1977 (1977-05-09) p. 2, fig. 4 | 7 |
| A | JP 1-186143 A (OLYMPUS OPTICAL CO., LTD.) 25 July 1989 (1989-07-25) | 1-8 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/012645**

| Patent document cited in search report | | | Publication date (day/month/year) | Patent family member(s) | | | Publication date (day/month/year) |
|---|---|---|---|---|---|---|---|
| JP | 58-139891 | U1 | 20 September 1983 | (Family: none) | | | |
| JP | 2014-193069 | A | 06 October 2014 | (Family: none) | | | |
| JP | 52-56305 | A | 09 May 1977 | (Family: none) | | | |
| JP | 1-186143 | A | 25 July 1989 | US | 5304884 | A | |
| | | | | DE | 3834673 | A1 | |

Form PCT/ISA/210 (patent family annex) (January 2015)